# EUROPEAN PATENT APPLICATION

(11) **EP 4 296 739 A1**
(43) Date of publication of application: **27.12.2023**
(21) Application number: 22862446.6
(22) Date of filing: 12.08.2022
(51) Int. Cl.: G02B 6/38, G02B 6/36

(54) **OPTICAL CABLE CONNECTOR END-PIECE, OPTICAL CONNECTION JOINT, OPTICAL ADAPTER AND OPTICAL CABLE CONNECTOR ASSEMBLY**

(30) Priority: 01.09.2021 BR 102021017398
(71) Applicant: Furukawa Electric Latam S.A., 81460-120 Curitiba - PR (BR)
(72) Inventor: CARNEIRO LOPES, Marcela, 80230-090 Curitiba (BR); DECONTO VIEIRA, Thiago, 82800-100 Curitiba (BR); FLÁVIO CRUZ, Renato, 82320-090 Curitiba (BR); GABRIEL CHAVES, Lucas, 81210-320 Curitiba (BR)
(74) Representative: Potter Clarkson
(86) International application number: PCT/BR2022/050316
(87) International publication number: WO 2023/028675

(57) **Abstract**

The present invention relates to an optical cable connector ferrule for connecting a reinforced optical cable connector to an optical adapter, the ferrule comprising a cavity for housing an optical cable connector plug connected to an optical cable; and a fastening portion comprising slots for fastening and aligning with the optical adapter. Furthermore, the present invention relates to an optical adapter comprising a first connection end for receiving a first optical cable; a second connection end for receiving a second optical cable; a stop surface within the first connection end for positioning an optical cable ferrule that houses an optical cable connector plug; an adaptation element disposed on the stop surface for connecting the first and second optical fibers; fastening features disposed on the stop surface for retaining a reinforced optical cable connector.

## Description

### TECHNICAL FIELD

The present invention relates to a connector assembly with ferrule and adapter for optical connection, where the reinforced optical cable connector ferrule comprises a clamping portion to provide connection with increased stability, robustness and protection for the optical fiber cable. Additionally, the present invention relates to an optical adapter comprising a plug-in region for improving the connection between optical fibers.

### BACKGROUND OF THE INVENTION

Fiber optic connectors are used in fiber optic communications systems to make the connection between optical cables, between an optical cable and an optical component, or between optical and electrical components. The optical cable connector must correctly interconnect the end faces of two optical fibers that need to be connected to realize maximum power transmission through the fibers. For this, the connection between the fibers must be precise and stable.

The reinforced connector is installed in optical termination boxes, which have outputs with reinforced adapters. The coupler is attached to the internal thread of the reinforced adapter, following the alignment indicated by the shape of the ferrule. Inside the box and at the other end of the reinforced adapter there are different standards of connectors, such as SC standards, MPO, among others, forming the connection for optical signal transfer.

Therefore, the state of the art presents a variety of solutions that aim to provide fiber optic connectors that are reinforced, pre-terminated, or pre-connected in order to improve connection stability, protection of fiber optic cables, and facilitates installation in the field.

The document WO2019245582A1 describes fiber optic connectors, connector enclosures, connectorized cable assemblies and methods for connectorization of cable assemblies are provided with particular cable adapter features, adapter extensions, multi-diameter sealing flexes, subcutaneous sealing elements and combinations thereof for connector and cable performance, integrity and durability.

The document US7762726B2 describes a fiber optic connector and a fiber optic adapter are disclosed that are manually connectable and disconnectable with each other by a sliding locking means. The optical cable connector includes an end that defines a part of the plug. The plug part holds a ferrule and also hooks directly into a port on the fiber optic adapter. The plug part includes a protrusion that also forms a tab. The fiber optic adapter port includes a flexible retaining latch in a slot. The slit engages the protrusion and thus rotationally aligns the optical cable connector and the adapter. The flexible retaining latch snaps on and off the latch when the plug portion of the optical cable connector is slid in and out of the fiber optic adapter port, thus providing the sliding locking means. Angled retaining surfaces are provided on the retaining latch and the latch engages. The angles defining the angular retention surfaces are chosen to provide the desired retention and release characteristics. A sealing medium and a threaded connection medium are also provided between the fiber optic adapter and the connector.

The document WO2020167779A1 describes a system for making or assembling fiber optic connectors that allows a pre-terminated fiber optic cable to be compatible with any number of different styles or types of fiber optic connectors or fiber optic adapters. In addition, an optical cable connector is described having first and second parts connected to a torsion interface to engage and also including a rotational interlock.

The document US7272282B1 describes fiber optic cables and assemblies useful for distributing the optical fibers to a network. Fiber optic cables include a first resistance component and a second resistance component with a cable jacket usually surrounding the first and second resistance components. One or more compartments are defined between the first and second strength components to house one or more optical fibers. The optical fibers in the fiber optic cable are easily accessible for distribution in the network, thus allowing the construction of suitable assemblies for distributing the optical fibers in the network.

As stated above, some solutions to the problems related to fiber optic cable connectorization are found in the prior art. However, the state of the art still lacks a solution where the reinforced connector ensures a strong and stable connection that facilitates and speeds up network installation.

Therefore, the need arises for an advantageous solution that provides greater robustness for a reinforced optical cable connector with a conformation that features improved connection stability. In addition, it is necessary to provide a fiber optic connector that has an internal body fitting available for optical cable plugs of the SC monofiber, MPO multifiber and/or hybrid cable types, using the same components and improving productivity by reducing the number of components.

### PURPOSES OF THE INVENTION

The purpose of the present invention is to provide an optical cable connector ferrule and an optical adapter with improved robustness and stability for better fixing of optical fibers, which can be installed in an agile and practical way.

### BRIEF DESCRIPTION OF THE INVENTION

In order to achieve the purposes described above, the present invention provides an optical cable connector ferrule for connecting a reinforced optical cable connector to an optical adapter, the ferrule comprising a cavity for housing an optical cable connector plug connected to an optical cable; and a fastening portion comprising slots for fastening and aligning with the optical adapter.

Further, the present invention provides an optical connection joint comprising an outer housing for housing an optical cable; an optical cable connector ferrule for connecting the optical connection joint, wherein the optical cable connector ferrule comprises a cavity for housing an optical cable connector plug connected to an optical cable; and a clamping portion for fitting to an optical adapter, wherein the clamping portion comprises slots for clamping and alignment.

The present invention provides an optical adapter comprising a first connection end for receiving a first optical cable; a second connection end for receiving a second optical cable; a stop surface within the first connection end for positioning an optical cable ferrule that houses an optical cable connector plug; an adapter element disposed on the stop surface for connecting the first and second optical fibers; fastening features disposed on the stop surface for retaining a reinforced optical cable connector.

Further, the present invention provides an optical cable connector assembly comprising an optical connection joint comprising an outer housing for housing a first optical cable; an optical cable connector ferrule for connecting the connection joint optical cable, wherein the optical cable connector ferrule comprises: a cavity for housing an optical cable connector plug connected to the first optical cable; and a fastening portion comprising slots for fastening and alignment; and an optical adapter comprising: a first connection end for receiving the optical cable connector ferrule; a second connection end for receiving a second optical cable; a stop surface within the first connection end for positioning the ferrule; and an adapter arranged on the stop surface for connecting the first and second optical fibers; and clamping features arranged on the stop surface for fitting into the slots in the ferrule.

### BRIEF DESCRIPTION OF THE IMAGES

The present invention will be better understood from the detailed description with reference to the images described below.
Image 1 illustrates an optical connection joint according to a mode of the present invention.
Image 2 illustrates the connector of Image 1 connected to an optical adapter according to a mode of the present invention.
Images 3.a to 3.d illustrate an optical cable connector ferrule according to a mode of the present invention.
Images 4.a and 4.b illustrate an optical adapter according to a mode of the present invention.
Image 5.a illustrates a side view of an optical cable connector assembly according to a mode of the present invention.
Image 5.b illustrates an A-A longitudinal section of the optical cable connector assembly illustrated in Image 5.a.
Image 6.a illustrates a top view of the optical cable connector assembly illustrated in Image 5.a.
Image 6.b illustrates a B-B longitudinal section shown in Image 6.a.
Images 7.a to 7.d illustrate an optical cable connector ferrule according to another embodiment of the present invention.
Images 8.a and 8.b illustrate an optical adapter according to another embodiment of the present invention.
Image 9.a illustrates a side view of an optical cable connector assembly according to another embodiment of the present invention.
Image 9.b illustrates a C-C longitudinal section of the optical cable connector assembly illustrated in Image 9.a.

### DETAILED DESCRIPTION OF THE INVENTION

The present invention relates to an optical cable connector ferrule for connecting a reinforced optical cable connector to an optical adapter for optical coupling, the ferrule comprising a cavity for housing an optical cable connector plug connected to an optical cable; and a fastening portion comprising slots for fastening and aligning with the optical adapter.

Additionally, the present invention also relates to an optical connection joint comprising an outer housing for housing an optical cable; an optical cable connector ferrule for connecting the optical connection joint, wherein the optical cable connector ferrule comprises a cavity for housing an optical cable connector plug connected to an optical cable; and a fastening portion for fitting to an optical adapter, wherein the fastening portion comprises slots for fastening and alignment.

Furthermore, the present invention also provides an optical adapter comprising a first connection end for receiving a first optical cable; a second connection end for receiving a second optical cable; a stop surface inside the first connection end for positioning an optical cable ferrule that houses an optical cable connector plug; a fitting element arranged on the stop surface for connecting the first and second optical fibers; fastening features arranged on the stop surface for retaining a reinforced optical cable connector.

Additionally, the present invention provides an optical cable connector assembly comprising a reinforced optical cable connector comprising an outer housing for housing a first optical cable; an optical cable connector ferrule for connecting the reinforced optical cable connector, wherein the optical cable connector ferrule comprises: a cavity for housing an optical cable connector ferrule connected to the first optical cable; and a fastening portion comprising slots for fastening and alignment; and an optical adapter comprising: a first connection end for receiving the optical cable connector ferrule; a second connection end for receiving a second optical cable; a stop surface within the first connection end for positioning the plug; a fitting element disposed in the stop surface for connecting the first and second optical fibers; and fastening features disposed in the stop surface for engaging the slots in the ferrule.

The following description will start from preferred modalities of the present invention, applied to a ferrule, an optical cable connector and an optical adapter, as illustrated in the images. It should be noted that some of the pictures do not show the fiber optic cable for simplification. However, as will become evident to a person skilled in the art, the invention is not limited to a particular realization.

Image 1 illustrates an optical connection joint 100 assembled according to a mode of the present invention for making the connection of fiber optics. In this illustrated embodiment, optical connection joint 100 is shown with a multifiber type optical fiber, but the present invention is not limited to a specific type of optical fiber.

According to the present invention, different optical fiber modalities can be used as single-fiber optical fiber cables, which comprise only one optical fiber, or multifiber, which comprise a plurality of optical fibers, such as 12 or 24 optical fibers per cable. Additionally, optical cable can be a hybrid cable that comprises, in addition to at least one optical fiber, metallic electrical conductors for power or data transmission. Thus, the present invention enables the optical coupling of optical cables of either monofiber or multifiber plug type of different standards. Thus, as will be evident to a person skilled in the art, the present invention is not limited to these patterns shown, and different connector plug patterns could be used, for example SC, FC, LC, LC duplex, ST, SN, CS, MPO, MTP, MT, MDC, and others. Furthermore, optical cables according to the present invention can still be hybrid cables comprising metallic conductors for electrical power transmission.

The 100 connector consists of a reinforced housing that houses a fiber optic cable internally, providing protection and enabling its connection. The connector housing 100, according to the illustrated mode, preferably comprises an outer housing 200, a protective element 300, and a tail guard 400. The outer housing of the 100 connector can comprise all the elements formed into one integral part. Preferably, the outer housing 200, the protective element 300, and the tail guard 400 are freestanding and have plug-and-attach elements for mounting the reinforced optical cable connector 100. This configuration makes it possible to advantage of ease of manufacturing and practicality of replacing parts in the field.

In addition, the connector 100 comprises an optical cable connector ferrule 500 for coupling with an optical fiber adapter or an optical element that has a corresponding shape for attachment. The optical cable connector ferrule 500 can be formed as an integral part together with the other elements of the connector housing 100. Preferably, the ferrule 500 is formed as a separate part comprising fastening elements in the outer housing 200 of the connector housing 100. This preferential mode allows the replacement of parts or the replacement of ferrules with different connection compatibility using the same reinforced connector of optical cable 100.

The ferrule 500 allows the connector 100 to connect to an optical adapter 600 as illustrated in Image 2. The Optical Adapter 600 makes the connection between two optical fibers, correctly interconnecting the end faces of the two optical fibers to realize maximum power transmission. For this purpose, the Optical Adapter 600 has alignment, guiding, and clamping elements that enable a stable and precise connection between the optical fibers.

The Optical Adapter 600 can be used to connect two optical fibers in a network, and is preferably fixed in an optical termination box that enables the output connection of several optical fibers.

Image 3.a illustrates a 500 optical cable connector endpoint in detail. The ferrule 500 consists of a substantially cylindrical body comprising a cavity to house an optical cable connector plug connected to an optical cable (not shown).

The ferrule 500 has an attachment portion that is formed by a flat face 515 for fitting to an optical adapter 600. The face flat 515 is formed from a 516 offset at the ferrule 500 as best seen in Image 3.b. Thus, the attachment portion has a cross-section that has a straight region and an arc-shaped region that extends from the 516 gradient.

In addition, the ferrule comprises 510 slots for attaching and aligning the ferrule 500 with the optical adapter 600. Preferably, two slots 510 formed by oblong openings are provided on the sides of the attachment portion of the ferrule 500. To improve the attachment and fitting of the ferrule 500 to the optical adapter 600, at the ends of the slots 510, snap-on tabs 511, 512 are provided. As seen in Image 3.c, which illustrates a front view of the ferrule 500, the 511, 512 tabs are substantially parallel.

Preferably, the ferrule 500 comprises an opening 514 arranged at the bottom of the ferrule attachment portion 500 to enable engagement with the reinforced body to be performed only in the correct position.

Preferably, the ferrule 500 comprises a flat base 513 extending in the inner region of the ferrule connection and parallel to the flat face 515 of the clamping portion to enable engagement with the optical adapter to be performed only in the correct position.

As described earlier, the optical cable connector ferrule 500 can be formed as an integral part with the reinforced optical cable connector housing 100. However, preferably the 500 ferrule is a separate part that can be attached to the connector housing 100. Thus, the outer housing 200 may comprise fastening elements, such as threads, and the end of the ferrule opposite the fastening portion may comprise compatible threads for fastening.

According to the preferred modality seen in Images 3.4 and 3.b, at the end opposite the attachment portion of the 500 ferrule are provided 520 coupling holes. Preferably, two coupling holes are arranged, one at the top and one at the bottom of that end. The 520 engagement holes make it possible for the ferrule to be fitted into mating projections (not shown) in the outer housing 200. In addition, the ferrule may also comprise angled bumps 521 near the coupling holes 520 as seen in detail in Image 3.d. The angled lugs 521 are arranged to improve the fit of the ferrule 500 in the outer housing 200. Thus, the present invention provides a simple way of attachment, since the ferrule 500 can be attached simply by being pressed against the outer housing 200 forming the connector illustrated in Image 1.

Image 4.a illustrates an optical adapter 600 according to a mode of the present invention. The 600 optical adapter has a first end 610 to receive a first optical cable and a second end 620 to receive a second optical cable, with the 610 and 620 ends opposite each other. Each of the 610 and 620 ends comprise a 630 alignment cavity for inserting optical cable connector plugs. In this way, one optical cable is inserted into the first end 610 of the optical adapter 600, while the other optical cable is inserted through the second end 620. Preferably, the first end 610 is configured to receive a reinforced 100 optical cable connector plug, while the second end 620 is configured to receive an optical cable connector plug. However, the two ends 610, 620 can be configured for connection of reinforced optical cable connectors according to the application.

Preferably, for attachment of the reinforced optical cable connector 100, the first connection end 610 of the optical adapter 600 comprises threads 615 for attachment to the outer housing 200 as seen in Image 5.b.

Image 4.b shows a view of the 600 optical adapter showing in detail the first connection end 610 configured to receive a reinforced 100 optical cable connector.

To enable the connection between the optical fibers, the optical adapter 600 has a stop surface 611 that extends transversely inside the alignment cavity 630 of the optical adapter 600. Preferably, in the middle of the stop surface 611 an adaptation element 614 is provided for the connection between the two optical cables. In this mode, the 614 adapter element is an opening that has a shape corresponding to the type of plug to be connected. In addition, from the 614 adaptation element extends a channel where the connector plugs of the two optical fibers can be connected (seen in detail in Images 5.a and 5.b).

Next to the stop surface 611, the optical adapter 600 has a mating region shaped to match the attachment portion of the ferrule 500. Preferably, the mating region is bordered by a relief with a flat surface, forming a space that allows the ferrule 500 to be mated to the optical adapter 600 only when the flat surface 515 is oriented in the same direction. Preferably, the relief with a flat surface is formed by a plurality of fins 612a-612c extending from the stop surface 611 and the inner surface of the optical adapter 600 to fit the ferrule 500. The fins 612a, 612b, and 612c are shaped to match the top of the ferrule 500 so that they fit over the flat face 515. Thus, the fins 612a-612c have the same length as the flat face 515 of the ferrule 500. Preferably, three equally spaced fins 612a, 612b, and 612c are provided, one central and two lateral, as fins extending in the longitudinal direction of the optical adapter 600. However, the present invention is not limited to this configuration so that only one or more than three fins can be used for attaching the flat face 515 of the ferrule 500.

In addition, the optical adapter 600 comprises attachment features 613 positioned next to the adapter element14 for fitting into the slots 510 and the snap tabs 511, 512. The fastening features 613 are preferably projections that extend the same length as the slots 510 and with a thickness corresponding to the distance between the fitting tabs 511, 512.

Thus, to connect the connector 100 to the optical adapter 600, the ferrule 500 is inserted into the alignment cavity 630 of the optical adapter 600 and moved so that its connector plug is positioned in the opening 614. In this way, the fins 612a-612c are positioned on the flat face 515 of the ferrule 500 and on the gradient 516 securing the optical cable connector assembly. While, the 613 clamping features fit into the slots 510. Preferably, the clamping features 613 are also snapped into clamping tabs 511, 512 provided on the ferrule 500.

This configuration makes it possible that the connector 100 can only be connected in one direction because of the mating region, so that the ferrule 500 is only inserted correctly when the flat face 515 is positioned in the same direction. In addition, the 100 connector is stabilized inside the 600 optical adapter, immobilizing and preventing rotation of the reinforced 100 optical cable connector.

Image 5.a illustrates a side view of an optical cable connector assembly that consists of the reinforced optical cable connector 100 with the optical adapter 600. Image 5.b represents an A-A longitudinal section of Image 5.a where the connection details of the optical cable connector assembly can be seen. Inside the optical adapter 600, the ferrule 500 of the 100 connector is inserted into the mating region, so that the optical cable connector plug 140, housed in the cavity of the ferrule 500, is positioned in the channel of the 614 opening for connection to another optical cable. Also, the alignment feature 613 is positioned inside the alignment tab 511.

Image 6.a illustrates a top view of the optical cable connector assembly and Image 6.b presents a B-B longitudinal section view, which shows the internal details viewed from the side. In this way, the way in which the ferrule 500 is inserted into the mating region of the optical adapter 600 is illustrated.

Thus, the present invention provides a mode of an optical ferrule connector 500 and an optical adapter 600 that provide a stable and firm connection and enable agile and practical operation. Also, the present invention provides a ferrule that represents a ferrule protection and connector aligner accessory that, preferably, can be removable, making it possible to change it at the time of installation to convert the shape of the connector and make it attachable to other standards of reinforced connector.

However, the present invention is not limited to this described mode. Image 7.a shows an optical cable connector ferrule 700 according to another embodiment of the present invention. This modality is similar to the one presented inImages 1 to 6.b. In this mode, the connector is used with a monofiber type optical cable.

According to this other mode of the present invention, the ferrule 700 is formed by an body substantially cylindrical comprising a cavity to house an optical cable connector plug connected to an optical cable.

The ferrule 700 has an attachment portion that is formed by a flat face 715 for fitting to an optical adapter according to the other embodiment of the present invention. The flat face 715 is formed from an offset 716 on the ferrule 700. Thus, the clamping portion has a cross section that has a straight region and an arc-shaped region from level 716.

In addition, the ferrule comprises 710 slots to enable alignment with the optical adapter. Preferably, two slots 710 formed by oblong openings are provided on the sides of the ferrule attachment portion 700. To improve the attachment and fitting of the ferrule 700 to the optical adapter, at the ends of the slots 710, snap-on tabs 711, 712 are provided. As seen in Image 7.c, which illustrates a front view of the 700 ferrule, the tabs 711, 712 are substantially parallel.

Preferably, the ferrule comprises an opening 714 arranged at the bottom of the ferrule attachment portion 700 to enable engagement with the reinforced body to be performed only in the correct position.

Preferably, the ferrule comprises a flat base 713 extending in the inner region of the ferrule connection and parallel to the flat face 715 of the attachment portion to enable the engagement in the optical adapter to be performed in the correct position only.

As described earlier, the optical cable connector ferrule 700 can be formed as an integral part with the reinforced optical cable connector housing 100. However, the 700 ferrule is preferably a separate part that can be attached to the connector housing 100. Thus, the outer housing may comprise fastening elements, such as threads, and the end of the ferrule opposite the fastening portion may comprise compatible threads for fastening.

According to the preferred embodiment of the present invention at the end opposite the attachment portion of the ferrule 700, coupling holes 720 are provided. Preferably, two coupling holes are arranged, one at the top and one at the bottom of that end. The 720 coupling holes make it possible to fit the ferrule to projections plugs (not shown) into the outer housing 200. In addition, the ferrule may also comprise angled lugs 721 near the coupling holes 720 as seen in detail in Image 7.d. The angled lugs 721 are intended to improve the fit of the ferrule 700 in the outer housing 200. Thus, the present invention provides a simple way of attachment, since the ferrule 700 can be attached simply by being pressed against the outer housing 200.

In this mode, the attachment portion comprises projections 718 and 719 near the slots 710 to provide an additional fit to the ferrule 700 on the optical adapter.

Image 8.a illustrates an optical adapter 800 according to another embodiment of the present invention. The 800 optical adapter has a first end for connecting a first 810 optical cable, and a second end for connecting a second 820 optical cable, where the 810 and 820 ends are opposite. Each 810 and 820 end comprises an 830 alignment cavity for inserting optical cable connector plugs. In this way, one optical cable is inserted into the first end 810 of the optical adapter 800, while the other optical cable is inserted through the opposite end 820. Preferably, the first end 810 is configured to receive a reinforced 100 optical cable connector plug, while the second end 820 is configured to receive an optical cable connector plug. However, the two ends 810, 820 can be configured for connection of a reinforced optical cable connector according to the application.

Preferably, for attachment of the reinforced optical cable connector 100, the first connection end 810 of the optical adapter 800 comprises threads 815 for attachment to the outer housing 200.

Image 8.b shows a view of the optical adapter 800 showing in detail the first connection end 810 configured receive a reinforced 100 optical cable connector.

To enable the connection between the optical fibers, the optical adapter 800 has a stop surface 811 that extends transversely inside the alignment cavity 830 of the optical adapter 800. Preferably, an adaptation element 814 is provided in the middle of the stop surface 811 for connecting the optical fibers. According to this mode, the 814 adapter element is a fiber optic ferrule connector that has an opening, where the ferrules of two optical fibers can be connected and aligned for connection.

Next to the 811 stop surface, the optical adapter 800 has a mating region shaped to match the attachment portion of the 800 ferrule. Preferably, a relief with a flat surface delimiting the fitting region, allowing the ferrule 700 to be fitted to the optical adapter only when the flat surface 715 is oriented in the same direction. Preferably, the relief with a flat surface is formed by a plurality of fins 812a-812c extending from the stop surface 811 and the inner surface of the optical adapter 800 to engage the ferrule 700. The fins 812a, 812b, and 812c are shaped to match the top of the ferrule 700 so that they fit over the flat face 715. Thus, the fins 812a-812c have the same length as the flat face 715 of the ferrule 700. Preferably, three equally spaced fins 812a, 812b, and 812c are provided, with one central and two side fins as fins extending in the longitudinal direction of the optical adapter 800.

In addition, the optical adapter 800 comprises attachment features 813 positioned next to the opening 814 for fitting into the slots 710 and the snap tabs 711, 712. The attachment features 813 are preferably projections that extend the same length as the slots 710 and with a thickness corresponding to the distance between the snap-in tabs 711, 712.

Additionally, the optical adapter 800 may comprise retention bases 818, 819 that extend from the attachment features 813 on the stop surface 811 to retain the projections 718, 719 of the ferrule 700. The retention bases 818, 819 are preferably formed as projections on the stop surface 811 with dimension corresponding to the front faces of the projections 718, 719. In addition, the 718, 719 retention bases comprise an edge for fitting the 718, 719 projections. Thus, in accordance with this embodiment of the present invention, an additional feature is provided for attaching and stabilizing the reinforced optical cable connector 100 to the optical adapter 800.

This configuration allows, in addition to the connector 100 only being connected in one direction because of the mating region, an additional attachment to be provided by the mating of the projections 718, 719 on the retention bases 818, 819 on the optical adapter.

Image 9.a illustrates a side view of an optical cable connector assembly that consists of the reinforced optical cable connector 100 with the 800 optical adapter. Image 9.b represents a C-C longitudinal section of Image 9.a where the connection details of the optical cable connector assembly can be seen. In this way, the manner in which the ferrule 700 is inserted into the mating region of the optical adapter 800 is illustrated.

Thus, the present invention provides a mode of an optical ferrule connector 700 and an optical adapter 800 that provide a stable and firm connection and enable agile and practical operation.

Thus, the present invention provides modalities of reinforced optical cable connector ends and of optical adapters that enable a more stable connection, allowing a better attachment of the optical fiber cable and that can be installed in an agile and practical way.

The present invention is still advantageous since provides a reinforced optical cable connector that allows the installation to be done in a more practical and simple way and, consequently, faster. Also, the present invention provides a ferrule that represents a ferrule protection and connector aligner accessory that, preferably, can be removable, making it possible to change it at the time of installation to convert the shape of the connector and make it attachable to other standards of reinforced connector.

Numerous variations falling within the protective scope of the present invention are permissible. Thus, it is reinforced that the present invention is not limited to the particular configurations or embodiments described above.

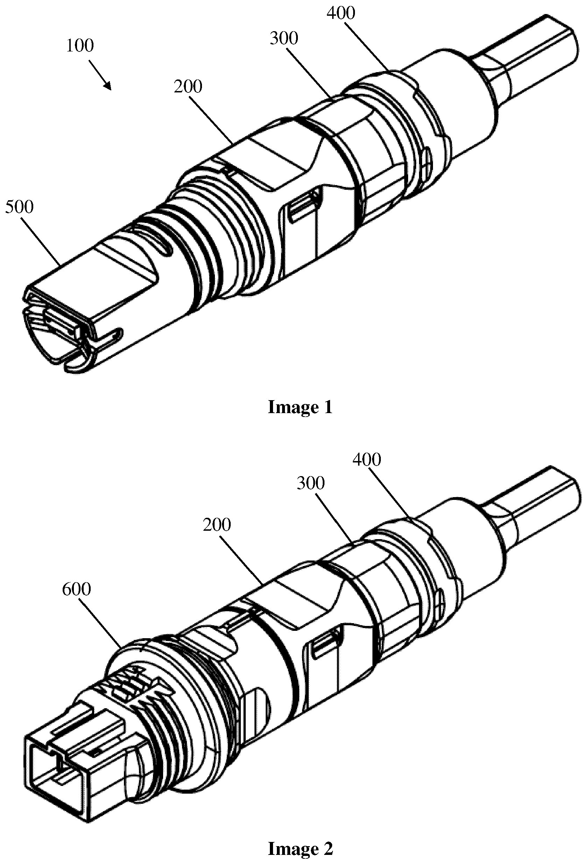

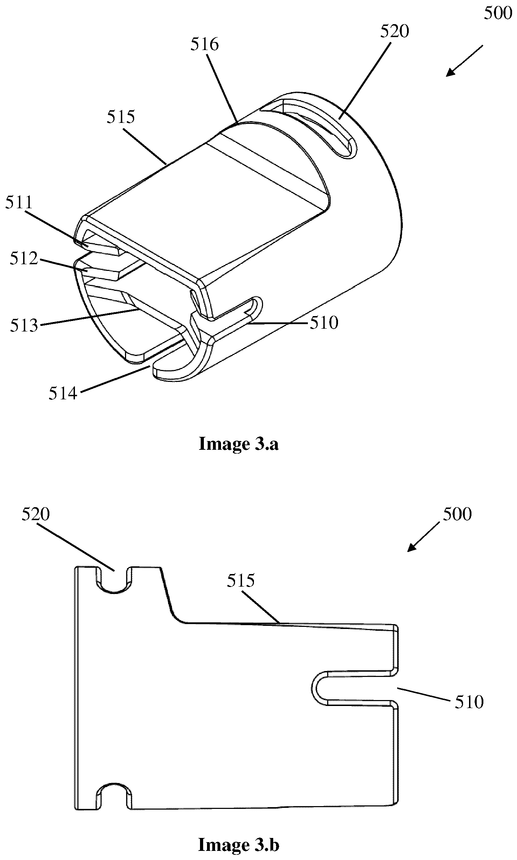

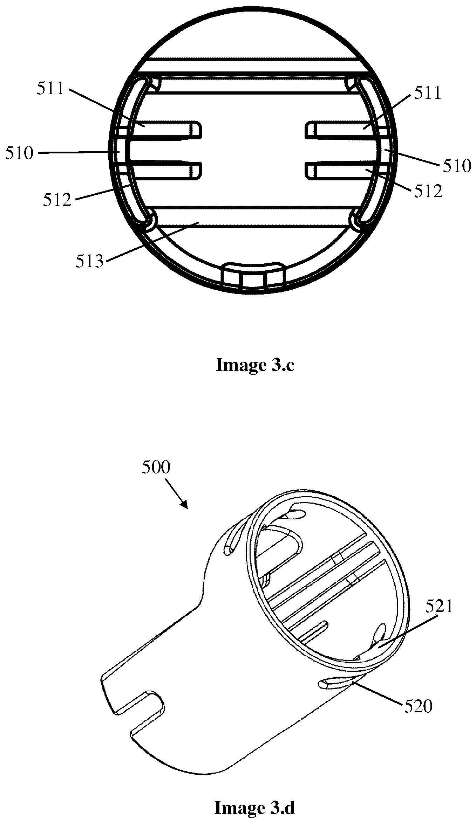

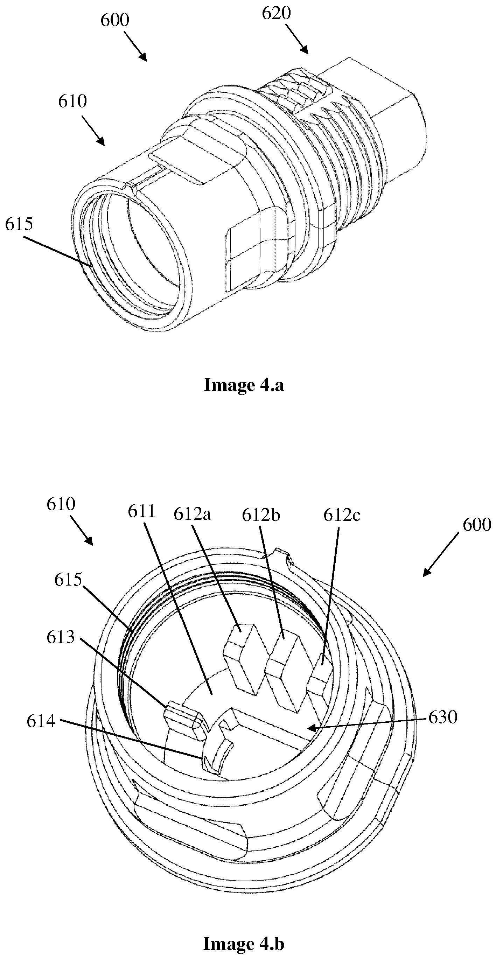

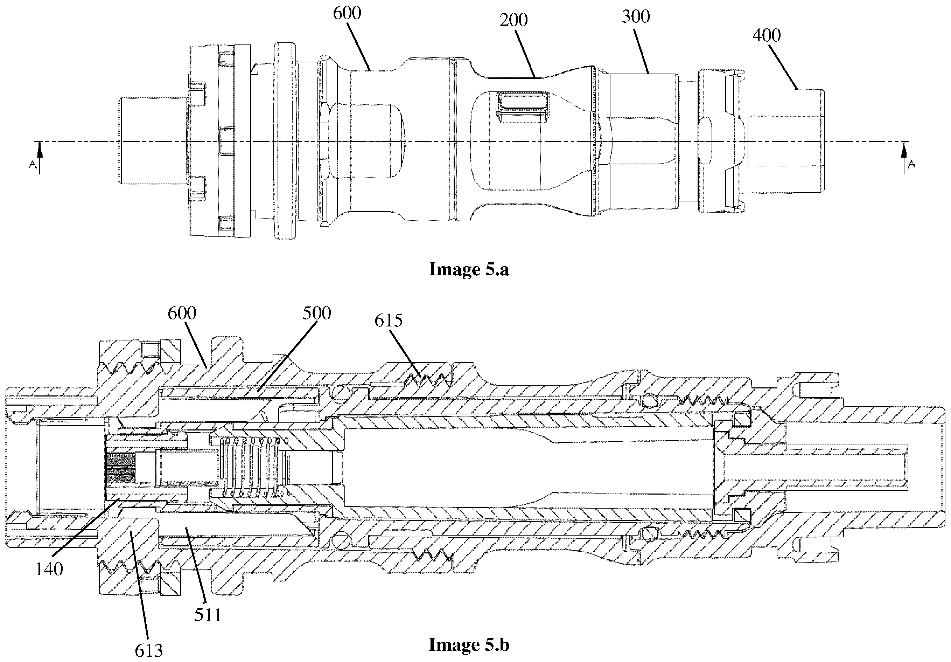

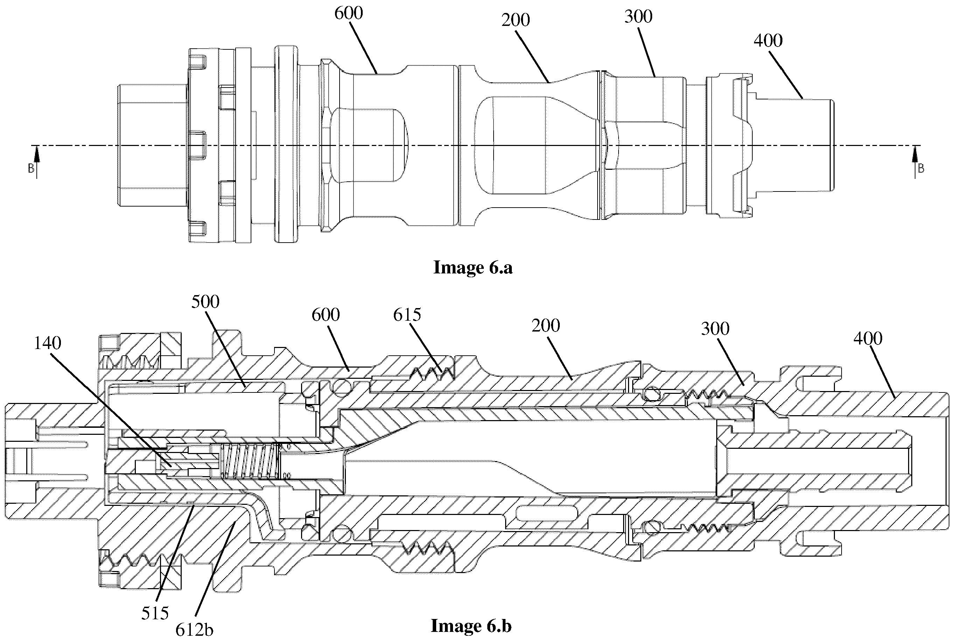

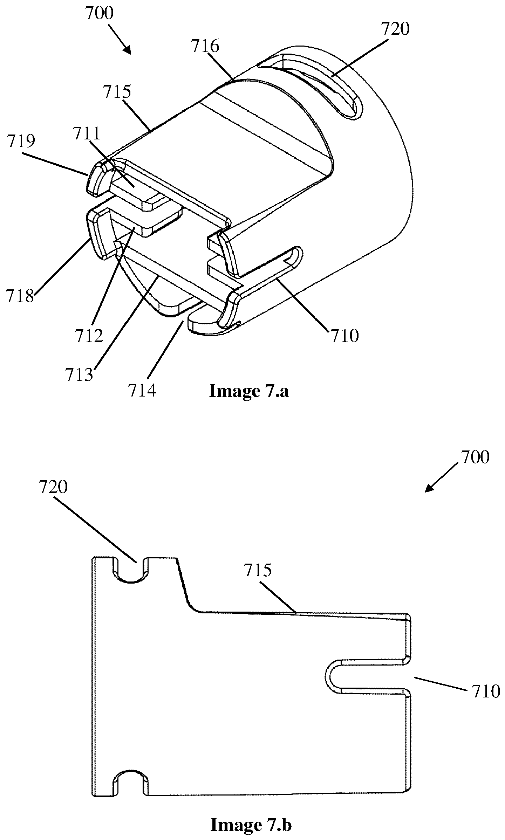

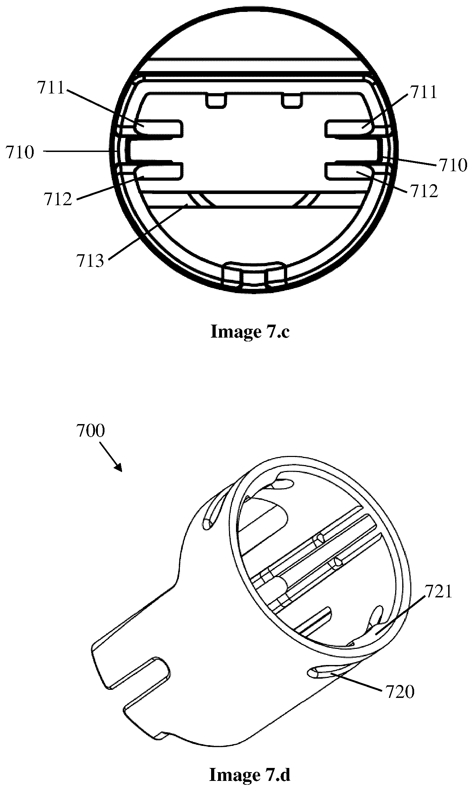

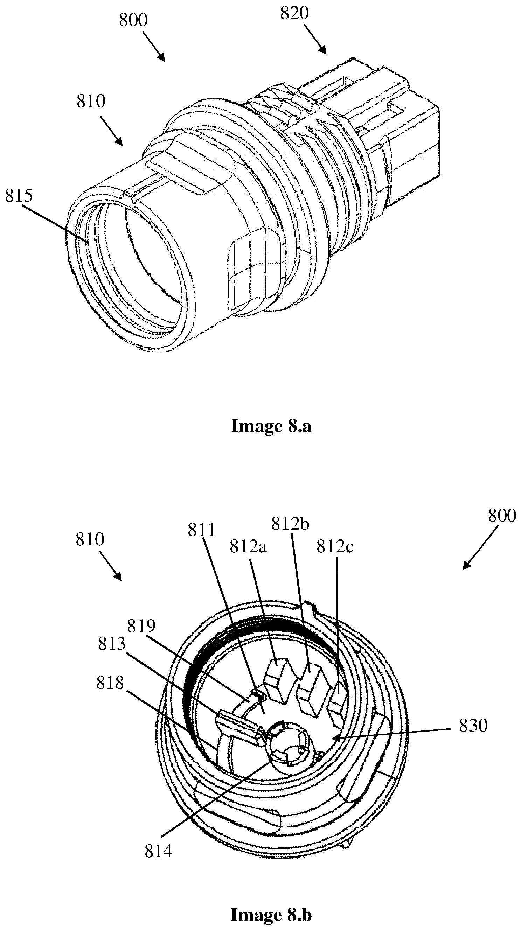

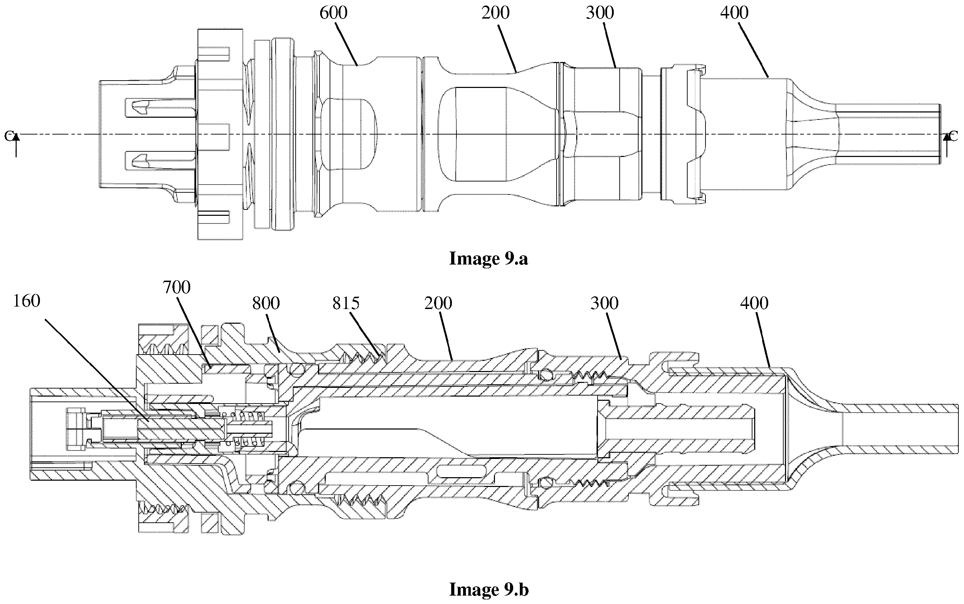

## Claims

1. Optical cable connector ferrule (500, 700) for connecting a reinforced optical cable connector (100) to an optical adapter (600, 800) for optical coupling, the ferrule **characterized in that** it comprises:
a cavity to house an optical cable connector plug (140) connected to an optical cable; and
a fastening portion comprising slots (510, 710) for fastening and aligning with the optical adapter (600, 800).

2. Optical cable connector ferrule (500, 700) according to claim 1, **characterized in that** the clamping portion comprises a flat face (515, 715) and the cross-section of the clamping portion comprises a cross-section formed by a straight section and an arc-shaped section.

3. Optical cable connector ferrule (500, 700) according to claim 1 or 2, **characterized in that** it comprises snap-on tabs (511, 512; 711, 712) positioned at the ends of the slots (510, 710).

4. Optical cable connector ferrule (500, 700) according to any one of claims 1 to 3, **characterized in that** it comprises coupling holes (520, 720) and angled lugs (521, 721) for attaching the optical cable connector ferrule (500, 700) to an optical cable connector (100).

5. Optical cable connector ferrule (500, 700) according to any one of claims 1 to 4, **characterized in that** it comprises an offset (516) for engaging the optical adapter (600).

6. Optical cable connector ferrule (700) according to any one of claims 1 to 5, **characterized in that** the attachment portion comprises projections (718, 719) adjacent to the slots (710).

7. Optical connection joint (100) for connecting an optical cable to an optical adapter (600, 800) for optical coupling **characterized in that** it comprises:
an outer housing (200) to house an optical cable; and
an optical cable connector ferrule (500, 700) for connection of the optical connection joint (100);
where the optical cable connector ferrule (500, 700) comprises:
a cavity to house an optical cable connector plug (140) connected to an optical cable; and
a snap-on attachment portion that comprises slots (510, 710) for attachment and alignment with the optical adapter (600, 800).

8. Optical connection joint (100) according to claim 7, **characterized in that** the clamping portion comprises a flat face (515, 715) and the cross-section of the clamping portion has a cross-section formed by a straight section and an arc-shaped section.

9. Optical connection joint (100) according to claim 7 or 8, **characterized in that** the ferrule (500, 700) comprises coupling holes (520, 720) and angled lugs (521, 721) for attaching the optical cable connector ferrule (500, 700) to an optical cable connector (100), and the outer housing (200) comprises projections for fitting into the coupling holes (520, 720).

10. Optical connection joint (100) according to any one of claims 7 to 9, **characterized in that** the ferrule (500, 700) is removably attached to the optical connection joint (100).

11. Optical connection joint (100) according to any of claims 7 to 10, **characterized in that** it comprises an protection element (300) and a tail guard (400).

12. Optical adapter (600, 800) for optical coupling **characterized in that** it comprises:
a first connection end (610, 810) to receive a first optical cable;
a second connection end (620, 820) to receive a second optical cable;
a stop surface (611, 811) inside the first connection end (610, 810) to position an optical cable ferrule (500, 700) that houses an optical cable connector plug (140);
an adaptation element (614, 814) arranged on the stop surface (611, 811) to connect the first and second optical fibers; and
clamping features (613, 813) arranged on the stop surface (611, 811) to retain a reinforced optical cable connector (100).

13. Optical adapter (600, 800) according to claim 12, **characterized in that** the first connection end (610, 810) comprises threads (615, 815) for attaching the optical adapter (600, 800) to the reinforced optical cable connector (100).

14. Optical adapter (600) according to claim 12 or 13, **characterized in that** the adaptation element (614) is an opening for connecting a multifiber optical cable connector plug.

15. Optical adapter (800) according to claim 12 or 13, **characterized in that** the adaptation element (814) is a optical fiber ferrule connector.

16. Optical adapter (600, 800) according to any one of claims 11 to 14, **characterized in that** it comprises a plurality of fins (612a-612c; 812a-812c) extending from the stop surface (611, 811) and through the inner surface of the optical adapter (600, 800) to engage the ferrule (500, 700).

17. Optical adapter (600, 800) according to claim 16, **characterized in that** it comprises three equally spaced fins (612a- 612c; 812a-812c) extending in the longitudinal direction of the optical adapter (600, 800).

18. Optical adapter (800) according to any one of claims 12 to 17, **characterized in that** it comprises retaining bases (818, 819) extending from the fastening features (813) on the stop surface (811), wherein the retaining bases (818, 819) are formed by projections on the stop surface (811) and comprise a snap-on edge.

19. Optical cable connector assembly for optical coupling **characterized in that** it comprises:
a reinforced optical cable connector (100) comprising:
an outer housing (200) to house a first optical cable;
an optical cable connector ferrule (500, 700) for connection of the reinforced optical cable connector (100), wherein the optical cable connector ferrule (500, 700) comprises:
a cavity to house an optical cable connector plug (140) connected to the first optical cable; and
a fastening portion comprising slots (510, 710) for fastening and alignment; and
an optical adapter (600) comprising:
a first connection end (610, 810) to receive the optical cable connector ferrule (500, 700);
a second connection end (620, 820) to receive a second optical cable;
a stop surface (611, 811) inside the first connection end (610, 810) to position the ferrule (500, 700);
an adaptation element (614, 814) arranged on stop surface (611, 811) to connect the first and second optical fibers; and
clamping features (613, 813) arranged on the stop surface (611, 811) to fit into the slots (510, 710) of the ferrule (500, 700).
